# EUROPEAN PATENT APPLICATION

(11) **EP 2 621 168 A2**
(43) Date of publication of application: **31.07.2013**
(21) Application number: 11827004.0
(22) Date of filing: 20.09.2011
(51) Int. Cl.: H04N 7/173

(54) **PROCESSING METHOD TO BE IMPLEMENTED UPON THE OCCURRENCE OF AN EXPRESSION SWITCH IN HTTP STREAMING**

(30) Priority: 20.09.2010 KR 20100092289
(71) Applicant: Humax Co., Ltd., Seongnam-si, Gyeonggi-do 463-825 (KR)
(72) Inventor: YIE, Chungku, Incheon 403-762 (KR); KIM, Min Sung, Anyang-si Gyeonggi-do 431-719 (KR); LEE, Ul Ho, Hwaseong-si Gyeonggi-do 445-853 (KR)
(74) Representative: Vossius & Partner
(86) International application number: PCT/KR2011/006940
(87) International publication number: WO 2012/039576

(57) **Abstract**

Disclosed is a processing method which enables natural reproduction in the event an expression switch occurs during an HTTP streaming transmission. The method involves: receiving a first media information file which stores information regarding segments in the event no expression switch occurs, and a second media information file which stores information regarding segments in the event an expression switch occurs; and receiving and reproducing segments of the content to be received with reference to the first information in the event no expression switch occurs, and receiving and reproducing segments of the content to be received with reference to the second information in the event an expression switch occurs. Thus, multimedia content may be provided without screen stoppage errors arising from changes in tge dynamic environment of a channel.

## Description

### [Technical Field]

The present invention relates to an HTTP streaming technique, as one of multimedia transmission methods and, more particularly, to a processing method for natural reproduction upon the occurrence of representation-switching during HTTP streaming transmission.

### [Background Art]

As the recent development of mobile communication technology promotes the rapid popularization of mobile communication terminals, our lives have been changed for most of ordinary person to always carry mobile communication terminals such as mobile phones, personal digital assistants (PDAs), and smart phones. Mobile communication terminals allows users to easily access communication networks and system resources that related art communication systems have to be efficiently distributed.

Among such technologies, streaming services receiving multimedia contents such as audio contents and video contents in real time via wireless contents communication networks and playing them are provided while users are on the go with mobile communication terminals. Streaming services applied to wired IPTVs provide multimedia contents through a Real-time Transport Protocol (RTP) or a combination of the RTP and MPEG-2.

However, in the case of wireless streaming services, problems arise when they are provided through the RTP or a combination of the RTP and the MPEG-2. Firstly, since the RTP does not support multiplexing, when multimedia contents are divided into a plurality of packets and transmitted, a plurality of ports may need to be opened according to the plurality of packets and also streaming services may not be provided normally by using the RTP, especially in a firewall installed area.

Secondly, the RTP operates on a UDP. The UDP divides multimedia contents into a plurality of packets and transmits them to a receiving side on a wireless internet, and then, does not confirm whether the receiving side receives the transmitted packets in a correct order. For this reason, packet loss may occur, and additionally, if packet loss occurs, since it means that lost contents packets are not retransmitted to the receiving side, this may cause contents loss. Accordingly, streaming services are provided to mobile communication terminals such as smart phones through a Hyper Text Protocol (HTTP) operating on a TCP. This is commonly referred to as HTTP streaming.

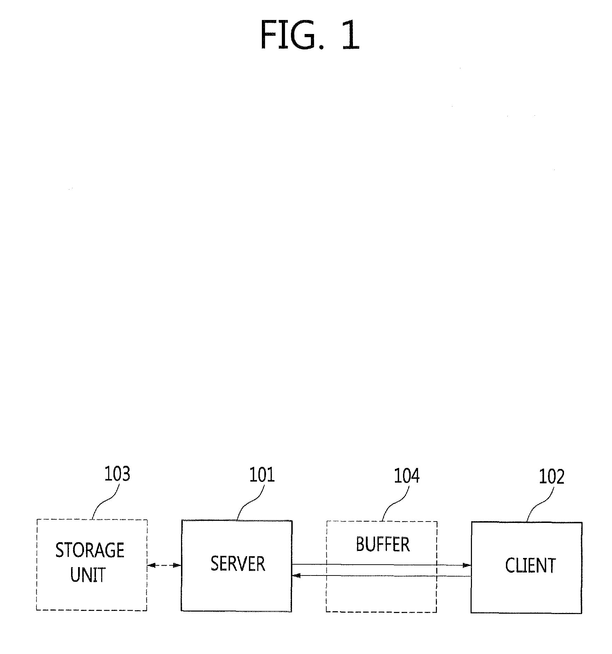

In general, since the HTTP is a protocol used to transmit hyper text such as texts and images, when a mobile communication terminal such as a smart phone provides multimedia contents streaming service through the HTTP, due to the large size of multimedia contents, the streaming service cannot be provided in real time. Then, hereinafter, an internal structure of a system for HTTP streaming service will be described in more detail with reference to FIG. 1.

FIG. 1 is a block diagram illustrating an internal structure of a system for HTTP streaming service in a multimedia system.

Referring to FIG. 1, the system for HTTP streaming service may be configured, including a server 101 and a client, and may be configured, further including a storage unit 103 and a buffer 104. The server 101 may divide multimedia contents, that is, a streaming target, into a plurality of segments in the same or different sizes. Firstly, the case in which the server 101 divides multimedia contents, that is, a streamlining target, into a plurality of segments in the same sizes will be described. The server 101 divides multimedia contents, that is, a streaming target, by each 2 sec, so that they may generate and store a plurality of segments. At this point, the same multimedia contents may have different versions according to types of a bit rate, a resolution, and an encoding codec, and this may be expressed as representation (hereinafter, this will be referred to as "representation").

For example, when a playback time of multimedia contents is 90 min and a bit rate corresponding to contents information has 75kbps, 150kbps, and 300kbps versions, the server 101 divides the multimedia contents having the playback time of 90 min by each 2 sec according to each version, so that the multimedia contents are divided into 2700 segments. Also, since the 2700 segments may have different versions according to types of a bit rate, a resolution, and an encoding codec, the server 101 divides the multimedia contents into a total of 8100 segments.

Secondly, the case in which the server 101 divides multimedia contents, that is, a streamlining target, into a plurality of segments in different sizes will be described. For example, when a playback time of multimedia contents is 90 min and a bit rate corresponding to contents information has 75kbps, 150kbps, and 300kbps versions, the server 101 divides the multimedia contents into a plurality of segments by each 2 sec during a playback time from 0 min to 3 min, and divides the multimedia contents into a plurality of segments by each 4 sec during a playback time from 3 min to 4 min.

The server 101 dividing multimedia contents into a plurality of segments allocates URL information to the plurality of segments divided in a predetermined number, and stores the URL information on each segment in a media information file and transmits it to the client 102. At this point, the media information file may be differently referred to as Media Presentation Description (MPD) or a manifest file according to organizations for standardization, which standardize HTTP streaming.

The server 101 may receive a segment transmission request from the client 102. According to an example embodiment of the present invention, when the client 102 detects a change in a channel state and receives a segment transmission request corresponding to a current channel state, the server 101 searches for the requested segment from the client 102 and transmits it to the client 102. The client 102 may initiate streaming service. The client 102 may receive a segment corresponding to a predetermined representation from the server 101, and then, may output it. Additionally, the client 102 detects a current channel state so as to request a segment according to the current channel state, to the server 101. For example, if the client 102 detects that a current channel state becomes worse while receiving a segment corresponding to a bit rate of 300kbps and outputting it on a screen, it requests the transmission of a segment corresponding to a low bit rate to the server 101, and then, receives a segment corresponding to a bit rate of 150kbps from the server 101 so as to output the received segment. In addition, according to another example, if the client 102 detects that a current channel state becomes better while receiving a segment corresponding to a bit rate of 70kbps and outputting it on a screen, it requests the transmission of a segment corresponding to a high bit rate to the server 101, and then, receives a segment corresponding to a bit rate of 150kbps from the server 101 so as to output the received segment.

However, while the client 102 receives a segment corresponding to a bit rate according to a current channel state and outputs it, when an output of a segment corresponding to a bit rate of 70kbps switches to an output of a segment corresponding to a bit rate of 150kbps, or an output of a segment corresponding to a bit rate of 300kbps switches to an output of a segment corresponding to a bit rate of 150kbps, that is, when representation switching occurs, screen interruption may occur.

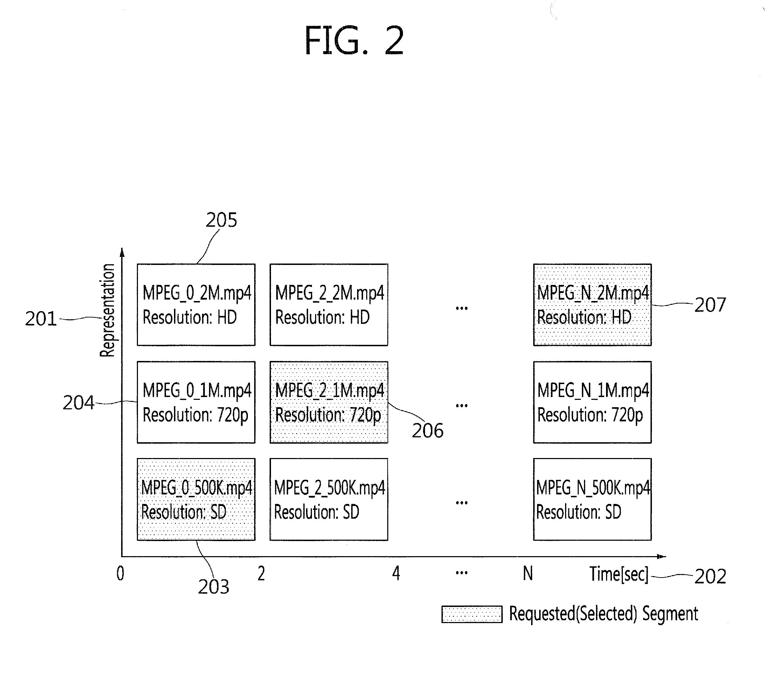

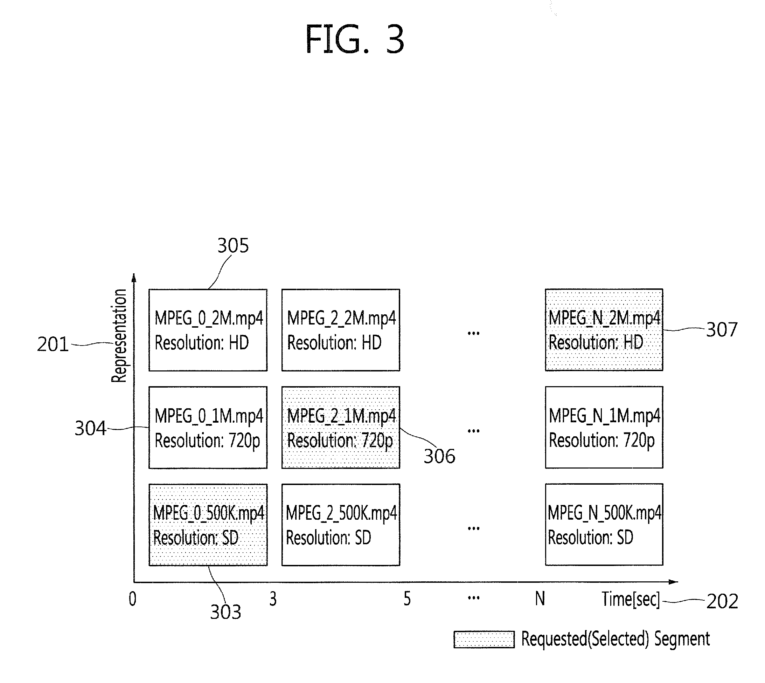

The storage unit 103 receives segments divided by the server 101, and stores the received segments according to contents information and time. Additionally, when the server 101 receives a segment request message from the client 102, the storage unit 103 searches for a segment corresponding to the received URL from the server 101, and then, transmits it to the server 101. Then, when the server 101 divides multimedia contents by the same/different predetermined periods in order for HTTP streaming service and stores them in the storage unit 103, the internal structure of the storage unit 103 will be described in more detail with reference to FIGS. 2 and 3.

FIG. 2 is a block diagram when multimedia contents are divided into a plurality of segments with the same size in order for HTTP streaming service. FIG. 3 is a block diagram when multimedia contents are divided into a plurality of segments with a different size in order for HTTP streaming service.

The server 101 may divide multimedia contents, that is, a streaming target, into a plurality of segments in the same or different sizes. Firstly, the case in which the server 101 divides multimedia contents, that is, a streamlining target, into a plurality of segments in the same sizes will be described with reference to FIG. 2. For example, when a playback time of multimedia contents is 90 min, a bit rate corresponding to contents information has 500kbps, 1Mbps, and 2Mbps versions, and a resolution has SD, 720P, and HD versions, the server 101 divides multimedia contents having a playback time of 90 min into 2700 segments by each 2 sec according to each contents information. At this point, the divided 2700 segments are generated as segments having different representations according to 500kbps, 1Mbps, and 2Mbps bit rates and SD, 720P, and HD resolutions, so that a total of 8100 segments are generated.

That is, segments including contents of 0 sec to 2 sec include a segment 203 corresponding to a bit rate of 500kbps and a resolution of a SD version, a segment 204 corresponding to a bit rate of 1Mbps and a resolution of a 720P version, and a segment 205 corresponding to a bit rate of 2Mbps and a resolution of an HD version. The remaining segments are divided by each 2 sec, so that they are divided into 2700 segments. Secondly, the case in which the server 101 divides multimedia contents, that is, a streamlining target, into a plurality of segments in different sizes will be described with reference to FIG. 3. For example, when a playback time of multimedia contents is 90 min, a bit rate corresponding to contents information has 500kbps, 1Mbps, and 2Mbps versions, and a resolution has SD, 720P, and HD versions, the server 101 divides the multimedia contents by each 3 sec from 0 sec to 3 sec according to each contents information, and divides the multimedia contents by each 2 sec from 3 sec to 4 sec, so that the multimedia contents are divided into a plurality of segments. That is, the server 101 generates segments in proportion to the times of the number of versions according to the contents information. For this reason, when URL information corresponding to a large amount of segments is included in a media information file, the size of the media information file becomes larger, so that it becomes impossible to provide the media information file to the client 102 at a fast speed.

That is, segments including contents of 0 sec to 3 sec include a segment 303 corresponding to a bit rate of 500kbps and a resolution of a SD version, a segment 304 corresponding to a bit rate of 1Mbps and a resolution of a 720P version, and a segment 305 corresponding to a bit rate of 2Mbps and a resolution of an HD version. Segments including contents of 3 sec to 5 sec include a segment corresponding to a bit rate of 500kbps and a resolution of a SD version, a segment 306 corresponding to a bit rate of 1Mbps and a resolution of a 720P version, and a segment corresponding to a bit rate of 2Mbps and a resolution of an HD version. That is, the server 101 generates segments in proportion to the times of the number of versions according to the contents information. Accordingly, when URL information corresponding to a large amount of segments is included in a media information file, the size of the media information file becomes larger, so that it becomes impossible to provide the media information file to the client 102 at a fast speed.

The client 102 may initiate streaming service. The client 102 may receive a segment corresponding to a predetermined representation from the server 101, and then, may output it. Additionally, the client 102 detects a current channel state so as to request a segment according to the current channel state to the server 101. For example, if the client 102 detects that a current channel state becomes worse while receiving a segment corresponding to a bit rate of 300kbps and outputs it on a screen, it requests the transmission of a segment corresponding to a low bit rate to the server 101, and then, receives a segment corresponding to a bit rate of 150kbps from the server 101 so as to output the received segment.

However, while the client 102 receives a segment corresponding to bit rate according to a current channel state and outputs it, when an output of a segment corresponding to a bit rate of 70kbps switches to an output of a segment corresponding to a bit rate of 150kbps, or an output of a segment corresponding to a bit rate of 300kbps switches to an output of a segment corresponding to a bit rate of 150kbps, that is, when representation switching occurs, screen interruption may occur.

Additionally, since each segment has a different length of a playback time, a playback time of a currently output segment may not continue with a playback time of a segment received from the server 101 and outputted. For example, although a playback time of a current output segment corresponds to 9 min 30 sec to 12 min 00 sec, if a playback time of a segment received from the server 101 and outputted is 12 min 03 sec to 15 min 00 sec, when a current output segment switches into the next output segment, that is, when representation switching occurs, screen interruption may occur.

Moreover, as a playback time of multimedia contents, that is, a streaming target, becomes longer, since the size of multimedia contents is increased, the number of divided segments is increased. Thus, a high capacity storage unit for storing a large amount of segments is required. As a high capacity storage unit is used, high production costs for configuring a system are required.

### [Disclosure]

### [Technical Problem]

The present invention provides a processing method for natural reproduction upon the occurrence of representation-switching during HTTP streaming transmission according to a first example embodiment of the present invention.

The present invention provides a method of transmitting a media information file that stores information on a plurality of segments for transmission target contents during HTTP streaming transmission.

The present invention provides a method of receiving HTTP streaming transmission according to a first example embodiment of the present invention.

The present invention provides a method of receiving HTTP streaming transmission according to a second example embodiment of the present invention.

### [Technical Solution]

To accomplish the above-mentioned first object of the present invention, a method of transmitting HTTP streaming according to a first example embodiment of the present invention, as a method of transmitting a media information file that stores information on a plurality of segments for transmission target contents, wherein the media information file stores : information on segments when representation switching does not occur; and information on segments when representation switching occurs, and the information on segments when representation switching does not occur is distinguished from information on segments when representation switching occurs.

To accomplish the above-mentioned second object of the present invention, the method of transmitting HTTP streaming according to a first example embodiment of the present invention, as a method of transmitting a media information file that stores information on a plurality of segments for transmission target contents, wherein the media information file includes a first media information file that stores information on segments when representation switching does not occur and a second media information file that stores information on segments when representation switching occurs.

To accomplish the above-mentioned third object of the present invention, a method of receiving HTTP streaming according to a first example embodiment of the present invention includes: receiving a media information file, the media information file storing information on a plurality of segments for reception target contents, the media information file storing first information on segments when representation switching does not occur and second information on segments when representation switching occurs, and the first information on segments when representation switching does not occur being distinguished from the second information on segments when representation switching occurs; and sequentially receiving and playing segments for reception target contents on the basis of the media information file, the segments for reception target contents being received and played on the basis of the first information when representation switching does not occur, and the segments for reception target contents being received and played on the basis of the second information when representation switching occurs.

To accomplish the above-mentioned third object of the present invention, a method of receiving HTTP streaming according to a second example embodiment of the present invention includes: receiving a media information file that stores information on a plurality of segments for reception target contents; when representation switching does not occur, generating only a first decoder process, and sequentially decoding and playing the plurality of segments for reception target contents on the basis of the media information file; and when representation switching occurs, generating a second decoder process, and decoding a segment, which is obtained after a time point of the representation switching of the reception target contents, in parallel with the first decoder process.

### [Advantageous Effects]

In relation to a processing method for natural reproduction upon the occurrence of representation-switching during HTTP streaming transmission according to the present invention, a proper segment is received according to a dynamically changing channel state, and the received segment is decoded using two decoders and then outputted, so that multimedia contents may be provided without screen interruption. Additionally, multimedia contents may be provided without screen interruption by distinguishing a media information file referenced when representation switching occurs from a media information file referenced when representation switching does not occur.

### [Description of Drawings]

FIG. 1 is a block diagram illustrating an internal structure of a system for HTTP streaming service in a multimedia system.

FIG. 2 is a block diagram when multimedia contents are divided into a plurality of segments with the same size in order for HTTP streaming service.

FIG. 3 is a block diagram when multimedia contents are divided into a plurality of segments with a different size in order for HTTP streaming service.

FIG. 4 is a view illustrating that, when representation switching does not occur at a receiving side during HTTP streaming transmission according to the first example embodiment of the present invention, a server 101 provides a predetermined offset index to a divided segment and illustrating a structure of a media information file that stores offset index.

FIG. 5 is a view illustrating that, when representation switching occurs at a receiving side during HTTP streaming transmission according to the first example embodiment of the present invention, the server 101 provides a predetermined offset index to a divided segment and illustrating a structure of a media information file that stores offset index.

FIG. 6 is a flowchart illustrating a method of transmitting a media information file that stores information on a plurality of segments for transmission target contents during HTTP streaming transmission according to the first example embodiment of the present invention.

FIG. 7 is a flowchart illustrating a method of receiving HTTP streaming according to the first example embodiment of the present invention.

FIG. 8 is a time chart illustrating a process of decoding a segment received when representation switching does not occur at a receiving side during HTTP streaming is received according to the second example embodiment of the present invention.

FIG. 9 is a time chart illustrating a process of decoding a segment received when representation switching occurs at a receiving side during HTTP streaming is received according to the second example embodiment of the present invention.

FIG. 10 is a flowchart illustrating a method of receiving HTTP streaming according to the second example embodiment of the present invention.

### [Mode for Invention]

The present invention may be embodied with many different modifications and thus may include several example embodiments. Therefore, specific embodiments will be shown in the drawings and described in detail. However, it will be understood by those of ordinary skill in the art that various changes in form and details may be made therein without departing from the spirit and scope of the present invention as defined by the following claims. While each drawing is described, like reference numerals refer to like elements.

Although terms like first, second, A and B may be used to describe various components, the components are not limited to the terms. These terms are used only to distinguish one component from other components. For example, a first component may be referred to as a second component and vice versa without being departing from the scope of the present invention. As used herein, the term and/or includes any and all combinations of one or more of the associated listed items.

In this disclosure below, when one part (or element, device, etc.) is referred to as being 'connected' to another part (or element, device, etc.), it should be understood that the former can be 'directly connected' to the latter, or 'electrically connected' to the latter via an intervening part (or element, device, etc.). On the contrary, when one component is "directly connected to" or "direction accessed to" another component, it should be understood as there is no component between the two components.

Terms used in this specification are used for describe specific embodiments, and are not intended to limit the scope of the present invention. A singular form used for the terms herein may include a plural form unless being clearly different from the context. In this specification, the meaning of "include," "comprise," "including," or "comprising," specifies a property, a region, a fixed number, a step, a process, an element and/or a component but does not exclude other properties, regions, fixed numbers, steps, processes, elements and/or components.

Unless otherwise defined, all terms used herein include technical terms and scientific terms, and also have the same meanings that those of ordinary skill in the art commonly understand. Additionally, it should be understood that typically used terms defined in dictionaries have consistent meanings in related technical contents, and if not explicitly defined, should not be interpreted as being excessive formal meanings.

Hereinafter, example embodiments of the present invention will be described in more detail with reference to the accompanying drawings.

A multimedia system providing multimedia contents through HTTP streaming according to an example embodiment of the present invention may include a server 101 and a client 102. A media information file may be differently referred to as an 'MPD' or an 'MF' according to organizations for standardization, which standardize HTTP streaming. Hereinafter, the media information file is used.

According to an example embodiment of the present invention, the server 101 may provide streaming service to the client 102 through wired or wireless internet technology. As the wireless internet technology, Wireless LAN (WLAN), Wireless broadband (Wibro), World Interoperability for Microwave Access (Wimax), and High Speed Downlink Packet Access (HSDPA) may be used. As the wired internet technology, Ethernet, an Htbrid Fiber Coax (HFC) method, an Assymtric Digital Subscriber Line (ADSL) method, a Very high-data rate Digital Subcriber Line (VDSL) method, a Fiber-to-the-home (FTTH) method, and Power Line Communication (PCL) method may be used. The present invention is not limited thereto.

According to an example embodiment of the present invention, the client 102, as an image display device that receives multimedia contents from the server 101 and plays them, may be realized with at least one type of fixed terminals including a desktop computer and IPTV or mobile terminals including a mobile communication terminal, a navigation device, a telematics terminal, a portable multimedia player, and a laptop computer.

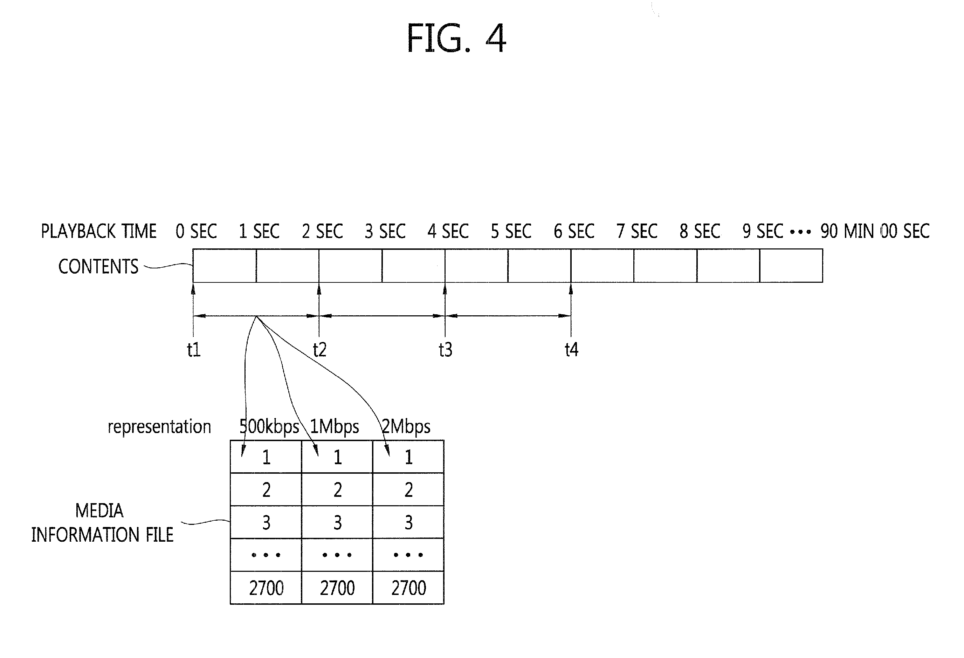

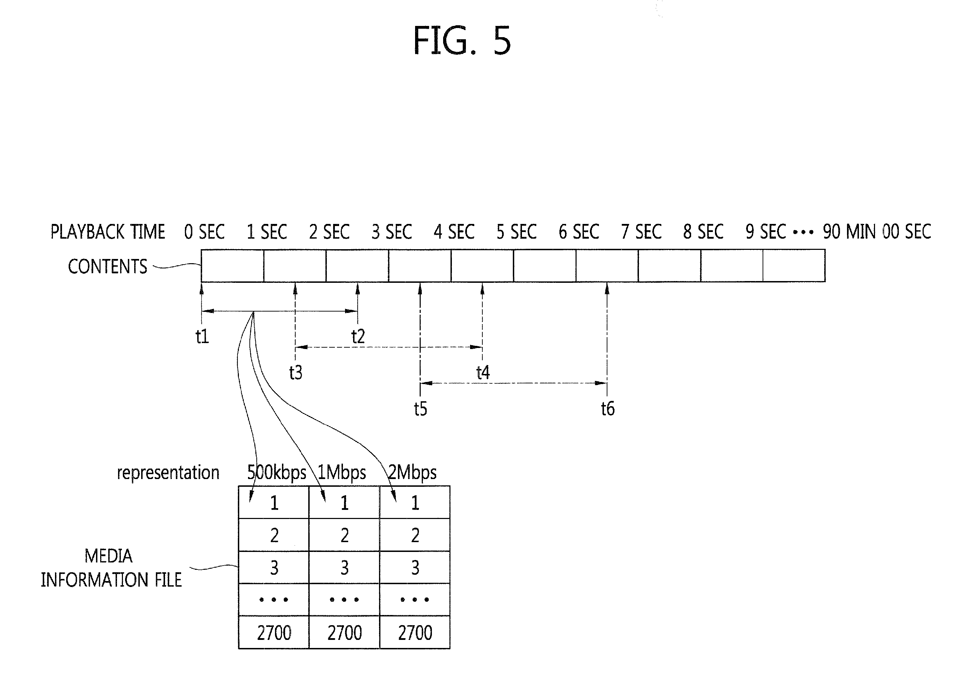

Additionally, according to an example embodiment of the present invention, the server 101 may include a contents database storing multimedia contents transmitted through streaming service, and the contents database may be realized with at least one type of storage medium such as flash memory, hard disk, Random Access Memory (RAM), Static Random Access Memory (SRAM), Read-Only Memory (ROM), Electrically Erasable Programmable Read-Only Memory (EEPROM), Programmable Read-Only Memory (PROM), magnetic memory, magnetic disk, and optical disk. Then, hereinafter, referring to FIGS. 4 and 5, according to whether representation switching occurs at a receiving side or not during HTTP streaming transmission according to a first example embodiment of the present invention, the server 101 provides a predetermined offset index to a divided segment, and a structure of a media information file that stores the offset index will be described.

FIG. 4 is a view illustrating that, when representation switching does not occur at a receiving side during HTTP streaming transmission according to the first example embodiment of the present invention, the server 101 provides a predetermined offset index to a divided segment, and shows a block diagram illustrating a structure of a media information file storing an offset index. FIG. 5 is a view illustrating that, when representation switching occurs at a receiving side during HTTP streaming transmission according to the first example embodiment of the present invention, the server 101 provides a predetermined offset index to a divided segment, and shows a block diagram illustrating a structure of a media information file storing an offset index.

The server 101 may divide multimedia contents, that is, a streaming target, into a plurality of segments in the same or different sizes. Firstly, the case in which the server 101 divides multimedia contents, that is, a streamlining target, into a plurality of segments in the same sizes will be described. According to the first example embodiment, when a playback time of multimedia contents is 90 minutes, a bit rate corresponding to contents information has 500kbps, 1Mbps, and 2Mbps versions, and a resolution has SD, 720P, and HD versions, the server 101 divides multimedia contents having a playback time of 90 minutes into 2700 segments by each 2 seconds according to each contents information. At this point, the divided 2700 segments are generated as segments having different representations according to 500kbps, 1Mbps, and 2Mbps bit rates and SD, 720P, and HD resolutions, therebygenerating a total of 8100 segments.

Secondly, the case in which the server 101 divides multimedia contents, that is, a streamlining target, into a plurality of segments in different sizes will be described. According to the first example embodiment, when a playback time of multimedia contents is 90 minutes and a bit rate corresponding to contents information has 75kbps, 150kbps, and 300kbps versions, the server 101 divides the multimedia contents into a plurality of segments by each 2 seconds during a playback time from 0 min to 3 min, and divides the multimedia contents into a plurality of segments by each 4 seconds during a playback time from 3 min to 4 min.

The server 101 provides a predetermined offset index to a divided segment according to whether representation switching occurs or not, and distinguishably stores an offset index in a media information file. That is, since a large amount of segments divided by the server 101 are stored in MPD, is not transmitted to a receiving side,only offset index provided to a segment is stored in a media information file, the receiving side may refer to a segment by using the offset index, and this is called a 'virtual segment'.

Firstly, referring to FIG. 4, when representation switching does not occur, the processes in which the server 101 provides a predetermined offset index to a divided segment and stores the offset index, that is, first information, in a media information file will be described. The server 101 sequentially provides first information, for example, 1, 2, ..., N, to a plurality of segments divided in the same or different sizes and stores only offset index, which is provided to a segment, in a media information file.

According to the first example embodiment, when a playback time of multimedia contents is 90 min, the server 101 divides multimedia contents having a playback time of 90 min into 2700 segments by each 2 sec according to each contents information. At this point, the divided 2700 segments are generated as segments having different representations according to 500kbps, 1Mbps, and 2Mbps bit rates, so that a total of 8100 segments are generated.

Among segments corresponding to a playback section from 0 sec to 2 sec, that is, segments from the time point t1 to the time point t2, the first information '1' is provided to a segment having a bit rate of 500kbps, the first information '1' is provided to a segment having a bit rate of 1Mbps, and the first information '1' is provided to a segment having a bit rate of 2Mbps. Among segments corresponding to a playback section from 2 sec to 4 sec, that is, segments from the time point t2 to the time point t3, first information '2' is provided to a segment having a bit rate of 500kbps, the first information '2' is provided to a segment having a bit rate of 1Mbps, and the first information '2' is provided to a segment having a bit rate of 2Mbps. Then, among segments corresponding to a playback section from 4 sec to 6 sec, that is, segments from the time point t3 to the time point t4, first information '3' is provided to a segment having a bit rate of 500kbps, the first information '3' is provided to a segment having a bit rate of 1Mbps, and the first information '3' is provided to a segment having a bit rate of 2Mbps. Such processes are repeated until an offset index is provided to all segments divided by the server 101.

Secondly, referring to FIG. 5, when representation switching occurs, processes in which the server 101 provides a predetermined offset index to a divided segment and stores an offset index, that is, second information, in a media information file will be described. According to the first example embodiment, when a playback time of multimedia contents is 90 min, the server 101 divides multimedia contents having a playback time of 90 min into 2700 segments by each 2 sec according to each contents information. At this point, the divided 2700 segments are generated as segments having different representations according to 500kbps, 1Mbps, and 2Mbps bit rates, so that a total of 8100 segments are generated.

Although the server 101 divides multimedia contents into a plurality of segments by each 2 sec, in order to prevent playback disconnection when representation switching occurs, an offset index is provided to a segment corresponding to a playback section from 0 sec to 2.5 sec instead of providing an offset index to a segment corresponding to a playback section from 0 sec to 2 sec.

Here, the offset index may provide information for searching for a Random Access Point (RAP) when representation switching occurs from a first representation to a second representation. When representation switching occurs from the first representation to the second representation, in relation to the switching point, an offset index may be included in a media information file (MPD) or a segment index or a segment.

When representation switching occurs from the first representation to the second representation, it may be indicated through a bitstream switching segment that representation switching occurs from the first representation to the second representation. In this case, the media information file (MPD) may be configured to include the bitstream switching segment, and the media information file (MPD) may be transmitted from a server to a client. The bitstream switching segment may include data necessary for switching to the second representation.

Alternatively, when representation switching occurs from the first representation to the second representation, it may be indicated through a bitstream switching flag that representation switching occurs from the first representation to the second representation. In this case, the media information file (MPD) may be configured to include the bitstream switching flag, and the media information file (MPD) may be transmitted from a server to a client.

As shown in FIG. 5, among segments from 0 sec to 2.5 sec, that is, segments from the time point t1 to the time point t2, second information '1' is provided to a segment having a bit rate of 500Mbps, the second information '1' is provided to a segment having a bit rate of 1Mbps, and the second information '1' is provided to a segment having a bit rate of 2Mbps. Then, among segments corresponding from 1.5 sec to 3.5 sec, that is, segments from the time point t3 to the time point t4, second information '2' is provided to a segment having a bit rate of 500kbps, the second information '2' is provided to a segment having a bit rate of 1Mbps, and the second information '2' is provided to a segment having a bit rate of 2Mbps. Then, among segments corresponding to a playback section from 3.5 sec to 6.5 sec, that is, segments from a time point t5 to a time point t6, second information '3' is provided to a segment having a bit rate of 500kbps, the second information '3' is provided to a segment having a bit rate of 1Mbps, and the second information '3' is provided to a segment having a bit rate of 2Mbps. Such processes are repeated until an offset index is provided to all segments divided by the server 101. When representation switching occurs from a first representation to a second representation, a client may find a stream access point (SAP) for each media stream in the second representation from a desired presentation time, which is close to but later than a current presentation time.

The server 101 may detect that the client 102 initiates streaming service. When the server 101 detects that the client 102 initiates the streaming service, the server 101 transmits a media information file including first information and second information, to the client 102. Additionally, the server 101 may receive a transmission request of a segment corresponding to a predetermined offset index, from the client 102. According to the first example embodiment of the present invention, the server 101 receives first information to be outputted by the client 102 according to the change of a channel state and transmits a segment corresponding to the first information to the client 102.

The client 102 may initiate streaming service. When the client 102 initiating streaming service, the client 102 receives a media information file storing information on a plurality of segments for reception target contents, from the server 101. At this point, the media information file includes first information that can be used as a reference when representation switching does not occur and second information that can be used as a reference when representation switching occurs.

Additionally, the client 102 detects a current channel state and then, if the current channel state is changed, requests a segment to the server 101. First, the case in which representation switching does not occur because a current channel state detected by the client 102 has no change will be described. According to the first example embodiment of the present invention, when the server 101 divides multimedia contents having a playback time of 10 min into segments by each 2 min unit and each segment has an offset index corresponding to 500kbps, 1Mbps, and 2Mbps, if it is determined that there is no channel state change at the time when a playback time of 7 min 50 sec elapses after a segment having a current bit rate of 500kbps is received, the client 102 requests transmission of segment to the server 101 on the basis of first information, and as the result of the request, the client 102 receives from the server 101 a segment having a playback time from 8 min 00 sec to 10 min 00 sec and the same bit rate of 500kbps as the currently output segment and then, outputs the received segment.

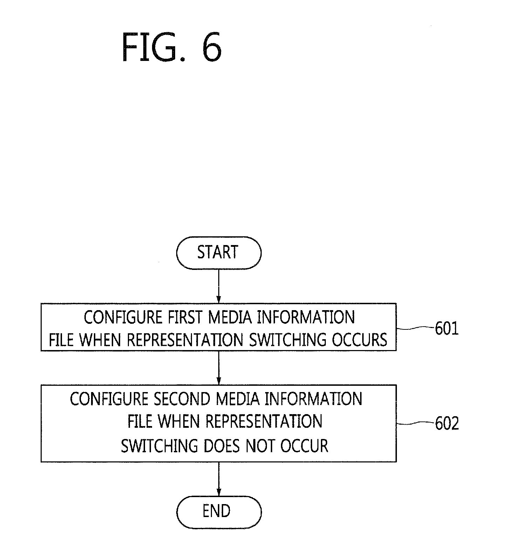

Secondly, the case in which representation switching occurs because a current channel state detected by the client 102 has a change will be described. According to the first example embodiment of the present invention, when the server 101 divides multimedia contents having a playback time of 10 min into segments by each 2 min unit and each segment has an offset index corresponding to 500kbps, 1Mbps, and 2Mbps, if the client 102 detects that a current channel state becomes better at the time when a current playback time elapses 7 min during the client 102 outputs a segment having a current bit rate of 500kbps, which is received from the server 101, the client 102 requests the transmission of a segment having a bit rate of 1 Mbps to the server 101 on the basis of second information and as the result of the request, receives from the server 101 a segment having a bit rate of 1Mbps and a playback time from 6 min 30 sec to 8 min 30 sec and then, outputs the received segment. Then, hereinafter, a method of transmitting a media information file storing information on a plurality of segments for transmission target contents during HTTP streaming transmission according to the first example embodiment of the present invention will be described with reference to FIG. 6.

FIG. 6 is a flowchart illustrating a method of transmitting a media information file that stores information on a plurality of segments for transmission target contents during HTTP streaming transmission.

Referring to FIG. 6, a first media information file that stores information on segments when representation switching does not occur is configured in step S601. According to the first example embodiment of the present invention, when a playback time of multimedia contents is 10 min, the server 101 divides multimedia contents having a playback time of 10 min into 300 segments by each 2 sec according to each contents information, and the divided 300 segments are generated as segments having different representations according to 500kbps, 1Mbps, and 2Mbps bit rates, so that a total of 900 segments are generated. Among segments from 0 sec to 2 sec, the first information '1' is provided to a segment having a bit rate of 500kbps, the first information '1' is provided to a segment having a bit rate of 1Mbps, and the first information '1' is provided to a segment having a bit rate of 2Mbps. Such processes are repeated until an offset index is provided to all segments divided by the server 101.

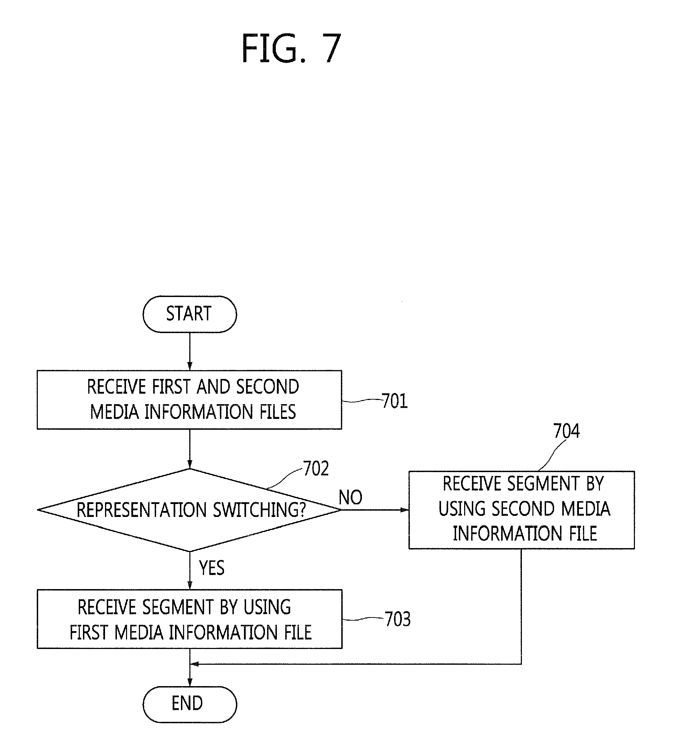

A second media information file that stores information on segments when representation switching occurs is configured in step S602. According to the first example embodiment of the present invention, the server 101 divides multimedia contents having a playback time of 10 min into 300 segments by each 2 sec according to each contents information and the divided 300 segments are generated as segments having different representations according to 500kbps, 1Mbps, and 2Mbps bit rates, so that a total of 900 segments are generated. Among segments from 0 sec to 2.5 sec, the first information '1' is provided to a segment having a bit rate of 500kbps, the first information '1' is provided to a segment having a bit rate of 1Mbps, and the first information '1' is provided to a segment having a bit rate of 2Mbps. Among segments from 1.5 sec to 3.5 sec, the second information '2' is provided to a segment having a bit rate of 500kbps, the second information '2' is provided to a segment having a bit rate of 1Mbps, and the second information '2' is provided to a segment having a bit rate of 2Mbps. Such processes are repeated until an offset index is provided to all segments divided by the server 101. Then, hereinafter, a method of receiving HTTP streaming according to the first example embodiment of the present invention will be described in more detail with reference to FIG. 7.

Referring to FIG. 7, the client 102 receives a media information file that distinguishably stores first information on segments when representation switching does not occur and second information on segments when representation switching occurs in step S701. When representation switching does not occur in step S702, the segments of the reception target contents are received on the basis of the first information and are played in step S703. According to the first example embodiment of the present invention, when the server 101 divides multimedia contents having a playback time of 10 min and a bit rate of 500kbps into segments by each 2 min unit and each segment has an offset index corresponding to 500kbps, 1Mbps, and 2Mbps, if it is determined that there is no channel state change at the time when a playback time of 7 min 50 sec elapses after a segment having a current bit rate of 500kbps is received, the client 102 requests transmission of segment to the server 101 on the basis of first information, and as the result of the request, the client 102 receives from the server 101 a segment having a playback time from 8 min 00 sec to 10 min 00 sec and the same bit rate of 500kbps as the currently output segment and then, and the client 102 outputs the received segment.

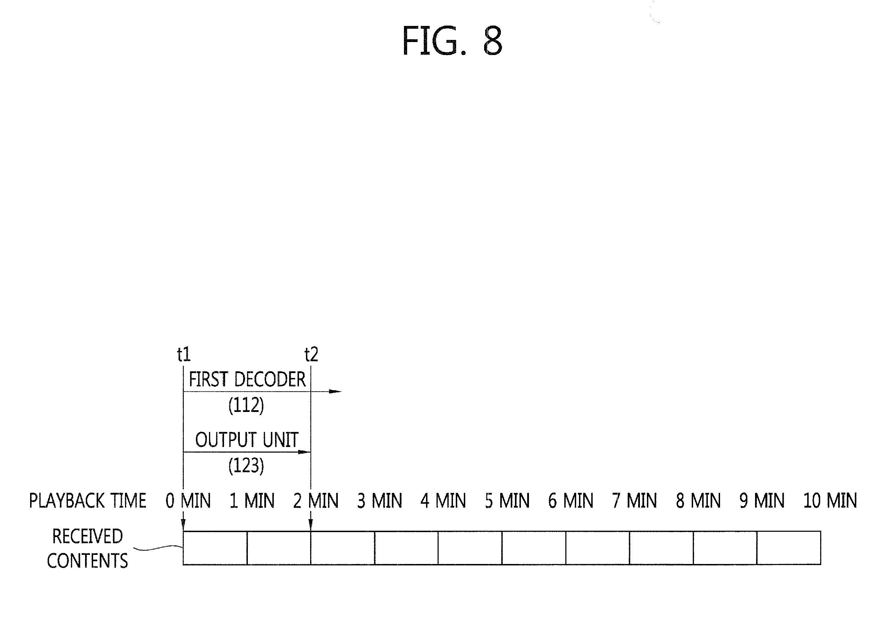

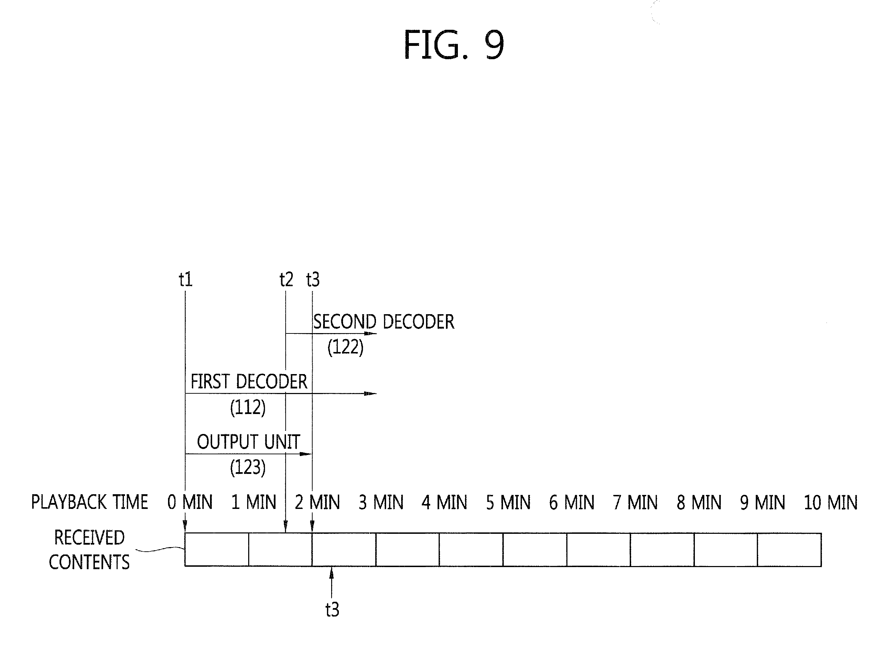

When representation switching occurs in step S702, the client 102 receives the segments of the reception target contents on the basis of the second information and then, plays them in step S704. According to the first example embodiment of the present invention, when the server 101 divides multimedia contents having a playback time of 10 min into segments by each 2 min unit and each segment has an offset index corresponding to 500kbps, 1Mbps, and 2Mbps, if the client 102 detects that a current channel state becomes better at the time when a current playback time elapses 7 min while a segment having a bit rate of 500kbps, which is received fro the server 101, is outputted, the client 102 requests the transmission of a segment having a bit rate of 1 Mbps to the server 101 on the basis of second information and as the result of the request, receives from the server 101 a segment having a bit rate of 1Mbps and a playback time from 6 min 30 sec to 8 min 30 sec and then, outputs the received segment. Then, a process of decoding a stream received according to whether representation switching occurs at a receiving side when HTTP streaming is received according to a second example embodiment of the present invention will be described with reference to FIGS. 8 and 9.

FIG. 8 is a time chart illustrating a process of decoding a stream received when representation switching does not occur at a receiving side during HTTP streaming is received according to the second example embodiment of the present invention. FIG. 9 is a time chart illustrating a process of decoding a stream received when representation switching occurs at a receiving side during HTTP streaming is received according to the second example embodiment of the present invention.

The server 101 may divide multimedia contents, that is, a streaming target, into a plurality of segments in the same or different sizes. First, the case in which the server 101 divides multimedia contents, that is, a streamlining target, into a plurality of segments in the same sizes will be described. For example, when a playback time of multimedia contents is 90 min, a bit rate corresponding to contents information has 500kbps, 1Mbps, and 2Mbps versions, and a resolution has SD, 720P, and HD versions, the server 101 divides multimedia contents having a playback time of 90 min into 2700 segments by each 2 sec according to each contents information. At this point, the divided 2700 segments are generated as segments having different representations according to 500kbps, 1 Mbps, and 2Mbps bit rates and SD, 720P, and HD resolutions, so that a total of 8100 segments are generated.

Secondly, the case in which the server 101 divides multimedia contents, that is, a streamlining target, into a plurality of segments in different sizes will be described. For example, when the playback time of multimedia contents is 90 min and a bit rate corresponding to contents information has a version of 75kbps, 150kbps, or 300kbps, the server 101 divides the multimedia contents into a plurality of segments by each 2 sec during a playback time from 0 min to 3 min, and divides the multimedia contents into a plurality of segments by each 4 sec during a playback time from 3 min to 4 min.

The server 101 may receive a segment request from the client 102. According to the second example embodiment of the present invention, when the client 102 detects a change in a channel state and the server 101 receives a transmission request of a segment corresponding to a current channel state, the server 101 searches for the segment requested from the client 102 and transmits the requested segments to the client 102.

The client 102 may initiate streaming service. When initiateing streaming service, the client 102 receives a media information file storing information on a plurality of segments for reception target contents, from the server 101, and then requests a segment to the server 101 on the basis of the media information file. A first decoder 112 of the client 102 receives a corresponding segment from the server 101 and decodes it, and an output 132 of the client 102 outputs the decoded segment.

The client 102 may detect a change in a current channel state. Firstly, the case in which representation switching does not occur because a current channel state detected by the client 102 has no change will be described with reference to FIG. 8. FIG. 8 is a view when a processor of the first decoder 112 is generated because representation switching does not occur in the client 102 including the first decoder 112 decoding a first stream from the server 101 and outputting it and the second output unit 132 outputting the decoded segment.

According to the second example embodiment of the present invention, when the server 101 divides multimedia contents having a playback time of 10 min into segments by each 2 min and each segment has an offset index corresponding to 500kbps, 1Mbps, and 2Mbps, the first decoder 112 receives a segment at the time point t1 and sequentially decodes and outputs the segment for reception target contents on the basis of a media information file, and the output unit 132 plays the segment decoded by the first decoder 112 at the time point t1.

Secondly, the case in which representation switching occurs when it is expected that a current channel state detected by the client 102 would be changed will be described with reference to FIG. 9. According to FIG. 9, the client 102 includes the first decoder 112, a second decoder 122 and the output unit 132. The first decoder 112 receives a first stream from the server 101, decodes the received first stream, and outputs a segment. The second decoder 122 receives a corresponding second stream when representation switching occurs, decodes the received second stream, and outputs a segment. The output unit 132 outputs the decoded segment. FIG. 9 is a view when the first decoder 112 and the second decoder 122 perform decoding in parallel after processes of the first and second decoders 112 and 122 are generated upon the occurrence of representation switching.

According to the second example embodiment of the present invention, when the server 101 divides multimedia contents having a playback time of 10 min into segments by each 2 min and each segment has an offset index corresponding to 500kbps, 1Mbps, and 2Mbps, the first decoder 112 receives a segment at the time point t1 and sequentially decodes and outputs the segment for reception target contents on the basis of a media information file, and the output unit 132 plays the segment decoded by the first decoder 112 at the time point t1.

When the client 102 expects that a current channel state would be better after a playback time elapses 2 min, it requests a segment corresponding to a bit rate of 1Mbps to the server 101 on the basis of a media information file. The first decoder 112 of the client 102 receives the segment corresponding to a bit rate of 1Mbps from the server 101 and decodes the received segment, and the output unit 132 outputs the decoded segment. However, after the first decoder 112 decodes a segment having a playback time from 0 min to 2 min and a bit rate of 500bps, and then decodes a segment having a playback time from 2 min to 4 min and a bit rate of 1Mbps, since decoder reconfiguration is required at the time point t3, time delay occurs, and due to this, screen interruption occurs.

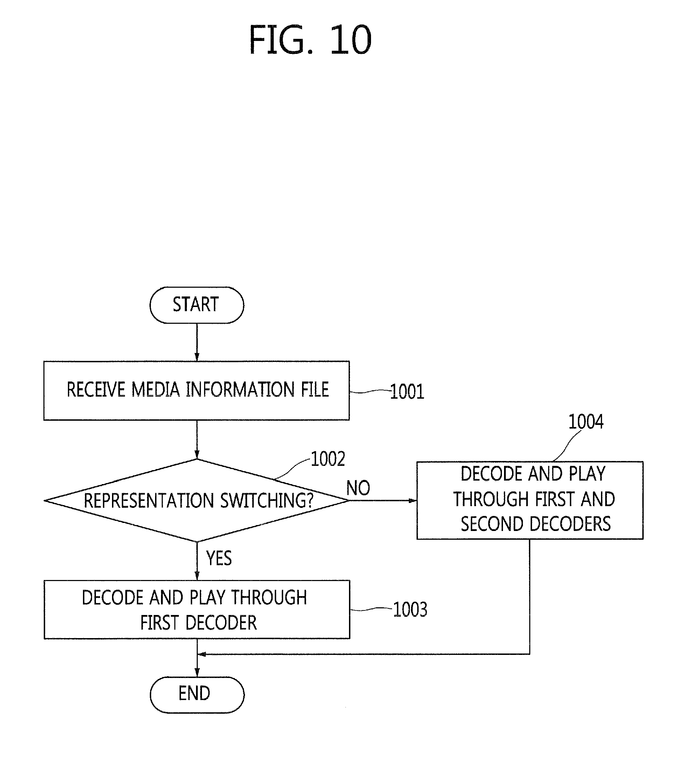

For this reason, the first decoder 112 of the client 102 decodes a segment having a playback time from 0 min to 2 min and a bit rate of 500bps, and the second decoder 122 receives a segment having a playback time from 2 min to 4 min and a bit rate of 1Mbps from the server 101 at the time point t2, and two decoders are used to perform decoding in parallel with the decoder 112, so that screen interruption does not occur at the time point t2 when representation switching occurs. Then, hereinafter, a method of receiving HTTP streaming according to the second example embodiment of the present invention will be described in more detail with reference to FIG. 10.

FIG. 10 is a flowchart illustrating a method of receiving HTTP streaming according to the second example embodiment of the present invention.

Referring to FIG. 10, the client 102 receives a media information file storing information on a plurality of segments for reception target contents in step S1001. When representation switching does not occur in step S1002, only a first decoder process is generated and then, on the basis of the media information file, the plurality of segments for reception target contents are sequentially decoded and played in step S1003. According to the second example embodiment of the present invention, when the server 101 divides multimedia contents having a playback time of 10 min into segments by each 2 min and each segment has an offset index corresponding to 500kbps, 1Mbps, and 2Mbps, the first decoder 112 receives a segment having a playback time from 0 min to 2 min, and then, on the basis of a media information file, sequentially decodes and outputs the segments for reception target contents, and the output unit 132 plays the segment decoded by the first decoder 112.

When representation switching occurs in step S1002, a second decoder process is generated and a segment after the representation switching time for reception target contents is decoded in parallel with the first decoder process and then is played in step S1004. According to the second example embodiment of the present invention, when the server 101 divides multimedia contents having a playback time of 10 min into segments by each 2 min and each segment has an offset index corresponding to 500kbps, 1Mbps, and 2Mbps, the first decoder 112 receives a segment having a playback time from 0 min to 2 min and a bit rate of 500Kps, and then, on the basis of a media information file, sequentially decodes and outputs the segments for reception target contents, and the output unit 132 plays the segment decoded by the first decoder 112. If it is detected that representation switching occurs because a current channel state becomes better when a playback time elapses 2 min, the second decoder 122 receives a segment having a playback time from 2min to 4 min and a bit rate of 1Mbps and decodes the received segment in parallel with the first decoder 112.

The above-described example embodiments include various aspects of examples. Although all possible combinations for describing the various aspects may not be described, those skilled in the art may appreciate that other combinations are possible. Accordingly, the present invention should be construed to include all other replacements, modifications, and changes which fall within the scope of the claims.

## Claims

1. A method of transmitting HTTP streaming, the method transmitting a media information file that stores information on a plurality of segments for transmission target contents,
wherein the media information file stores :
information on segments when representation switching does not occur; and
information on segments when representation switching occurs,
and the information on segments when representation switching does not occur is distinguished from information on segments when representation switching occurs.

2. A method of transmitting HTTP streaming, the method transmitting a media information file that stores information on a plurality of segments for transmission target contents,
wherein the media information file comprises a first media information file that stores information on segments when representation switching does not occur and a second media information file that stores information on segments when representation switching occurs.

3. A method of receiving HTTP streaming transmission, comprising:
receiving a media information file, the media information file storing information on a plurality of segments for reception target contents, the media information file storing first information on segments when representation switching does not occur and second information on segments when representation switching occurs, and the first information on segments when representation switching does not occur being distinguished from the second information on segments when representation switching occurs; and
sequentially receiving and playing segments for reception target contents on the basis of the media information file, the segments for reception target contents being received and played on the basis of the first information when representation switching does not occur, and the segments for reception target contents being received and played on the basis of the second information when representation switching occurs.

4. A method of receiving HTTP streaming transmission, the method comprising:
receiving a media information file that stores information on a plurality of segments for reception target contents;
when representation switching does not occur, generating only a first decoder process, and sequentially decoding and playing the plurality of segments for reception target contents on the basis of the media information file; and
when representation switching occurs, generating a second decoder process, and decoding a segment, which is obtained after a time point of the representation switching of the reception target contents, in parallel with the first decoder process.
